# EUROPÄISCHE PATENTSCHRIFT

(11) **EP 1 281 879 B1**
(45) Veröffentlichungstag und Bekanntmachung des Hinweises auf die Patenterteilung: **09.08.2006**
(21) Anmeldenummer: 02009899.2
(22) Anmeldetag: 02.05.2002
(51) Int. Cl.: F16C 13/00

(54) **Durchbiegungseinstellwalze**
Controlled deflection roller
Rouleau à compensation de flèche

(30) Priorität: 31.07.2001 DE 10137326
(43) Veröffentlichungstag der Anmeldung: 05.02.2003
(73) Patentinhaber: Voith Paper Patent GmbH, 89522 Heidenheim (DE)
(72) Erfinder: van Haag, Rolf, Dr., 47647 Kerken (DE)
(74) Vertreter: Manitz, Finsterwald & Partner GbR

(56) Entgegenhaltungen:
- WO-A-98/17862
- US-A- 4 776 069
- US-A- 4 856 157
- US-A- 4 955 120
- US-A- 5 189 776
- DATABASE WPI Section Ch, Week 200155 Derwent Publications Ltd., London, GB; Class F09, AN 2001-498420 XP002299117 & FI 1 072 87B B1 (METSO PAPER INC) 29. Juni 2001 (2001-06-29)

## Beschreibung

Die Erfindung betrifft eine Pressvorrichtung zur Schandlung einer Materialbahn, insbesondere Papier- oder Kartonbahn, mit einem zwischen einer Durchbiegungseinstellwalze und einer Begenfläche gebildeten Spalt, wobei die Durchbiegungseinstellwalze einen umlaufenden Walzenmantel, ein den Walzenmantel axial durchsetzendes drehfestes Joch und am Joch angeordnete, auf die Innenseite des Walzenmantels eine Stützkraft ausübende hydrostatische Stützelemente umfasst, die jeweils durch eine druckfluidbetätigte Zylinder/Kolben-Einheit gebildet und entsprechend über einen Druckraum beaufschlagbar sind, und die Hydrostatiktaschen der hydrostatischen Stützelemente jeweils über wenigstens eine Drossel oder Kapillare mit Druckfluid ver-sorgt werden. Eine derartige Pressvorrichtung, ist beispielsweise in der WO 98/17862 A und in der EP-B-0 328 503 beschrieben.

In Durchbiegungseinstell- oder Durchbiegungsausgleichswalzen kommen Stützquellen oder Stützelemente zum Einsatz, die durch eine Versorgungsleitung mit Öldruck beaufschlagt werden. Durch diesen Öldruck wird die jeweilige Stützquelle gegen den rotierenden Walzenmantel gepreßt. Da die Kolbenfläche der Stützquelle kleiner ist als die zum Walzenmantel weisende Hydrostatiktaschenfläche, stellt sich ein geringerer Taschenöldruck ein. Die Druckdifferenz zwischen Kolbendruck und Taschendruck bestimmt den Volumenstrom, der über die zwischen die Taschenfläche und die Kolbenfläche geschalteten Kapillaren fließt. Somit stellt sich der jeweilige Volumenstrom an einer Stützquelle in Abhängigkeit vom Kolbendruck ein.

Zur individuellen Profilkorrektur, d.h. insbesondere zur Korrektur bestimmter Eigenschaftsquerprofile, der durch den Walzenspalt laufenden Warenbahn, insbesondere Papier- oder Kartonbahn, werden die Stützquellen einzeln mit einem Öldruck beaufschlagt. Die Höhe der Öldrücke wird über eine online-Profildickenmessung der Warenbahn geregelt.

In Abhängigkeit von den jeweils erforderlichen Profilkorrekturen kann es zu großen Differenzen zwischen den Öldrücken der verschiedenen Stützquellen kommen (z.B. von 3,5 bis 90 bar von Stützquelle zu Stützquelle). Dies führt, wie bereits angedeutet, zu Volumenstromdifferenzen an den Stützquellen. Zwischen dem rotierenden Walzenmantel und den Stützquellen entsteht durch die Ölscherung in Abhängigkeit von der Mantelgeschwindigkeit und der Ölspalthöhe, die wieder vom Volumenstrom, der Öltemperatur und dem Taschendruck abhängig ist, Reibung. Infolge der großen Druckunterschiede ergibt sich somit von einer Stützquelle zur anderen eine unterschiedlich hohe Reibleistung, die sich in Temperaturdifferenzen am Walzenmantel auswirkt. Diese Temperaturdifferenzen wirken sich wieder auf die Form des Walzenmantels aus und bringen somit einen das erzeugte Streckenlastprofil der Durchbiegungseinstellwalze beeinflussende Rückkopplungseffekt mit sich.

Da sich bei einer Druckentlastung an einer Stützquelle ein geringerer Volumenstrom einstellt, ergibt sich an dieser Stützquelle trotz einer betragsmäßig geringeren Reibleistung als bei höheren Drücken eine höhere Temperatur. Eine höhere Temperatur führt nun aber zu einer Ausdehnung des Walzenmantels, die sich in einer Streckenlasterhöhung im Walzenspalt auswirkt. Die Temperaturentwicklung wirkt sich also gegenläufig zur gewünschten Druckentlastung aus und ist somit unerwünscht. In Einzelfällen kann dies sogar zu einer Instabilität im Regelverhalten führen.

Üblicherweise wird die Temperaturentwicklung an den Stützquellen durch einen separaten Kühlölström begrenzt, der in den Innenraum der Walze geleitet wird. Hierzu wird ein Volumenstrom geringer Temperatur, dessen Menge über die Rücklauftemperatur der Walze geregelt wird, über Düsen im Walzeninnenraum verteilt. Bisher wird mit einer solchen Verteilung jeder Stützquelle die gleiche Menge Kühlöl zugeführt. Infolge der zuvor genannten Volumenstromdifferenzen stellen sich nun aber trotz der zugeführten Kühlölmenge unterschiedliche Temperaturen an den Stützquellen ein. Dieser Sachverhalt wird durch das folgende Berechnungsbeispiel belegt:

Bei dem vorliegenden Berechnungsbeispiel handelt es sich um eine Biegeausgleichswalze eines Glättwerks, wobei die Produktionsgeschwindigkeit 1540 m/min beträgt. Die Oberflächentemperatur der Walze ist in diesem Fall gleich der Rücklauftemperatur, so daß kein Wärmestrom durch den Mantel fließt.

Die für die Berechnung relevanten technischen Daten sind wie folgt:

| | |
|---|---|
| Außendurchmesser: | 1016 mm |
| Innendurchmesser: | 780 mm |
| Stützquellengröße: | 70 mm Kolbendurchmesser |
| Ölviskosität: | ISO VG 68 (Mineralöl) |
| Zulauftemperatur: | 40°C für alle Ströme (Stützquelle und Kühlöl) |

In der Berechnung wurden die Temperaturentwicklung und die Reibleistung einer Stützquelle für einen minimal (3,5 bar) und maximal (90 bar) möglichen Kolbendruck in Abhängigkeit vom Kühlstrom untersucht.

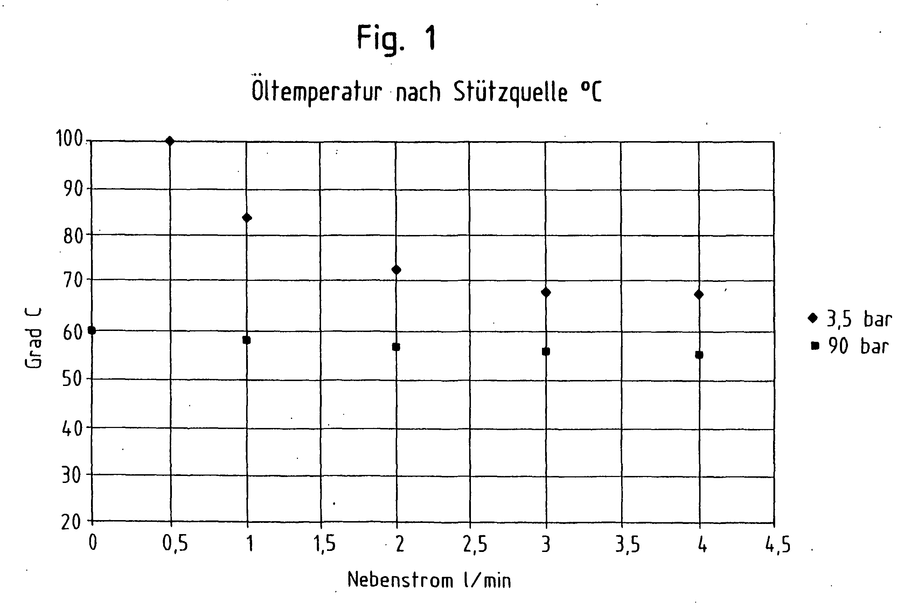

Figur 1 zeigt ein Diagramm, in dem für den minimalen und den maximalen Kolbendruck 3,5 bar bzw. 90 bar jeweils die sich nach einer Stützquelle ergebende Öltemperatur über dem Nebenstrom, d.h. Kühlstrom, dargestellt ist. Dabei ist die Temperatur in °C und der Nebenstrom in l/min angegeben. Die dargestellte Öltemperatur wurde unmittelbar im Auslauf in Manteldrehrichtung hinter der Stützquelle ermittelt.

Im Einlauf der Stützquelle wird Öl mit einer Mischtemperatur, die sich durch das Zuspritzen des Kühlöls im Walzeninneren ergibt, mit dem Walzenmantel mitlaufend unter die Stützquelle eingezogen.

Anhand der Figur 1 ist zu erkennen, daß die Öltemperaturen bei einem Kolbendruck von 3,5 bar für alle untersuchten Kühlölströme deutlich höher liegen als bei einem Kolbendruck von 90 bar.

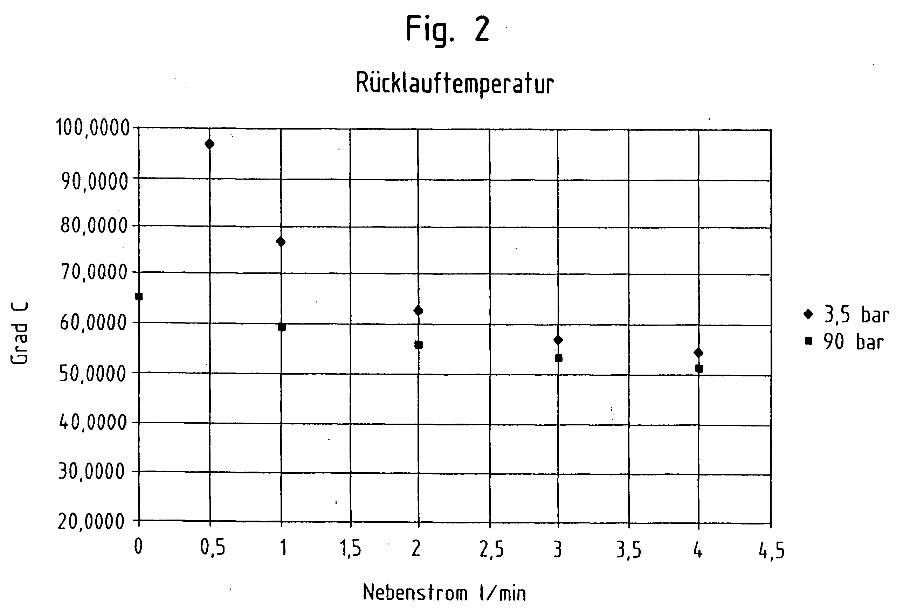

Die sich einstellende Mischtemperatur im Walzeninneren entspricht in etwa der örtlichen Rücklauftemperatur. Figur 2 zeigt ein Diagramm, in dem für die beiden verschiedenen Kolbendrücke jeweils die berechnete Rücklauftemperatur über dem Kühlstrom (Nebenstrom) aufgetragen ist. Hierbei ist zu beachten, daß in der Berechnung jeweils nur eine Stützquelle untersucht wurde, d.h. eine Vermischung des Öls aus mehreren Stützquellen mit unterschiedlichen Öldrücken und damit unterschiedlichen Temperaturen unberücksichtigt bleibt.

Die sich einstellenden örtlichen Rücklauftemperaturen zeigen mit kleiner werdenden Kühlölströmen eine steigende Temperaturdifferenz zwischen einer hoch belasteten und einer niedrig belasteten Stützquelle. Eine solche Temperaturdifferenz wirkt sich nun aber maßgeblich auf die Form des rotierenden Walzenmantels aus.

Bei der in der WO 98/17862 A beschriebenen Pressvorrichtung gemäß dem Oberbegriff des Anspruchs 1 ist die Durchbiegungseinstellwalze als selbsteinstellende Walze ausgeführt, über deren Stützelemente einerseits während des normalen Betriebs die Streckenlastverteilung einstellbar und andererseits der Spalt durch eine entsprechende Verlagerung des gesamten Mantels relativ zu Joch geöffnet und geschlossen werden kann. Dabei werden die Hydrostatiktaschen der Stützelemente während des Öffnens und Schließens des Spaltes mit konstantem Volumenstrom oder konstantem Druck beaufschlagt. Während des normalen Betriebs erfolgt über den die Hydrostatiktaschen beaufschlagenden Volumenstrom oder Druck als jeweilige Stellgröße eine Temperaturregelung.

Es sind zudem auch bereits Pressvorrichtungen bekannt, bei denen während der Einstellung einer jeweiligen Streckenlastverteilung die Hydrostatiktaschen der Stützelemente der betreffenden Durchbiegungseinstellwalze mit einem konstanten Volumenstrom an Druckfluid beaufschlagt werden (vgl. zum Beispiel US-A-4 955 120, US-A-4 856 157 und US-A-5 189 776).

Bei einer aus der US-A-4 776 069 bekannten Pressvorrichtung werden die Hydrostatiktaschen eines jeweiligen Stützelements der betreffenden Durchbiegungseinstellwalze einerseits über die Druckkammer des betreffenden Stützelements mit Druckfluid versorgt, während sie andererseits über drosselfreie Kanäle mit Hilfskammern verbunden sind, um bei einem Druckabfall in einer jeweiligen Hydrostatiktasche infolge eines Verkippens des betreffenden Stützelements ein Gegenkippmoment zu erzeugen und dadurch den Druck in der betreffenden Hydrostatiktasche konstant zu halten.

Ziel der Erfindung ist es, eine verbesserte Pressvorrichtung der eingangs genannten Art zu schaffen, bei der die zuvor genannten Probleme beseitigt sind.

Diese Aufgabe wird gemäß der Erfindung dadurch gelöst, dass durch eine Steuer- oder Regeleinrichtung eine jeweilige Streckenlastverteilung über den Kolbendruck der Stützelemente eingestellt wird und dabei die Hydrostatiktaschen der hydrostatischen Stützelemente jeweils über wenigstens eine Vordrossel mit einem konstanten Fluiddruckbeaufschlagt werden.

Aufgrund dieser Ausbildung kehrt sich der eingangs beschriebene Temperatureffekt um. So stellen sich jetzt an einem mit höheren Drücken beaufschlagten Stützelement kleinere Fluidspalthöhen ein, während sich bei einem mit niedrigeren Drücken beaufschlagten Stützelement größere Fluidspalthöhen ergeben. Mit zunehmend höher werdenden Drücken und einer entsprechend größer werdenden Belastung eines jeweiligen Stützelements erhöht sich somit entsprechend auch die Reibleistung. Mit zunehmend kleiner werdenden Drücken und einer entsprechend kleiner werdenden Belastung eines jeweiligen Stützelements wird die Reibleistung entsprechend geringer. Im Ergebnis führt dies bei höheren Drücken und einer entsprechend höheren Belastung eines jeweiligen Stützelements zu einer entsprechend höheren Mischtemperatur im Walzeninnem und umgekehrt.

Damit wird nun aber auch eine Umkehr des oben beschriebenen, die Streckenlastverteilung beeinflussenden Temperatureffekts bewirkt. So wird nunmehr an den Stellen, an denen ein hoher Druck erwünscht ist, die entsprechende Wirkung durch die thermisch bedingte Walzenausdehnung unterstützt. An den Stellen, an denen beispielsweise über eine entsprechende Regelung eine gewünschte Druckentlastung vorgegeben wird, ergibt sich eine thermisch bedingte Entlastung durch die Walzenform. Der auftretende Temperatureffekt unterstützt also jeweils die im übrigen vorgesehene Steuerung oder Regelung.

Dabei wirkt sich der thermisch unterstützte Effekt verstärkt auf die Streckenlast aus, da der Volumenstrom an einer jeweiligen Hydrostatiktasche zugeführtem Druckfluid mit steigendem Druck im Druckraum und entsprechend mit steigender Belastung des jeweiligen Stützelements abnimmt, da an einem mit hohem Kolbendruck beaufschlagten Stützelement sich entsprechend ein höherer Taschendruck einstellt, wodurch die Druckdifferenz an der Vordrossel kleiner wird. Entsprechend wird auch der Volumenstrom an der jeweiligen Hydrostatiktasche zugeführtem Druckfluid geringer. Dagegen ergeben sich bei kleineren Kolbendrücken und entsprechend kleineren Taschendrücken entsprechend größere Druckdifferenzen an der jeweiligen Vordrossel, so daß sich entsprechend größere Volumenströme ergeben.

Die jeweilige Vordrossel kann insbesondere wieder im Innern des betreffenden Stützelements vorgesehen sein.

Zweckmäßigerweise ist die Vordrossel an ihrem von der Hydrostatiktasche abgewandten Ende an einen vom Druckraum getrennten, das Fluid konstanten Drucks führenden Kanal angeschlossen. Dabei kann ein jeweiliger Kanal beispielsweise auch mehreren Vordrosseln zugeordnet sein.

Weist das jeweilige Stützelement mehrere Hydrostatiktaschen auf, so ist vorzugsweise jede dieser Hydrostatiktaschen jeweils über wenigstens eine Vordrossel mit einem konstanten Fluiddruck beaufschlagt.

Eine zweckmäßige praktische Ausführungsform der erfindungsgemäßen Durchbiegungseinstellwalze zeichnet sich dadurch aus, daß mehrere zumindest in einer Reihe in Richtung der Walzenachse hintereinander am Joch angeordnete Stützelemente vorgesehen sind und daß die Hydrostatiktaschen sämtlicher Stützelemente jeweils über wenigstens eine Vordrossel mit einem konstanten Fluiddruck beaufschlagt sind.

Die jeweiligen Hydrostatiktaschen werden vorzugsweise mit Drucköl versorgt. Eine jeweilige Vordrossel kann somit insbesondere mit einem konstanten Öldruck beaufschlagt sein.

Die Erfindung wird im folgenden anhand von Ausführungsbeispielen unter Bezugnahme auf die Zeichnung näher erläutert; in dieser zeigen:
- Figur 1: ein Diagramm, in dem für zwei verschiedene Kolbendrücke jeweils die sich nach einer Stützquelle ergebende Öltemperatur über dem Kühlölstrom (Nebenstrom) dargestellt ist,
- Figur 2: ein Diagram, in dem für zwei verschiedene Kolbendrükke jeweils die berechnete Rücklauftemperatur über dem Kühlölstrom (Nebenstrom) dargestellt ist,
- Figur 3: eine Lediglich der Erläuterung der Problematik dienende schematische geschnittene Teildarstellung einer Durchbiegungseinstellwalze und
- Figur 4: eine schematische geschnittene Teildarstellung einer beispielhaften Ausführungsform einer erfindungsgemäßen Durchbiegungseinstellwalze.

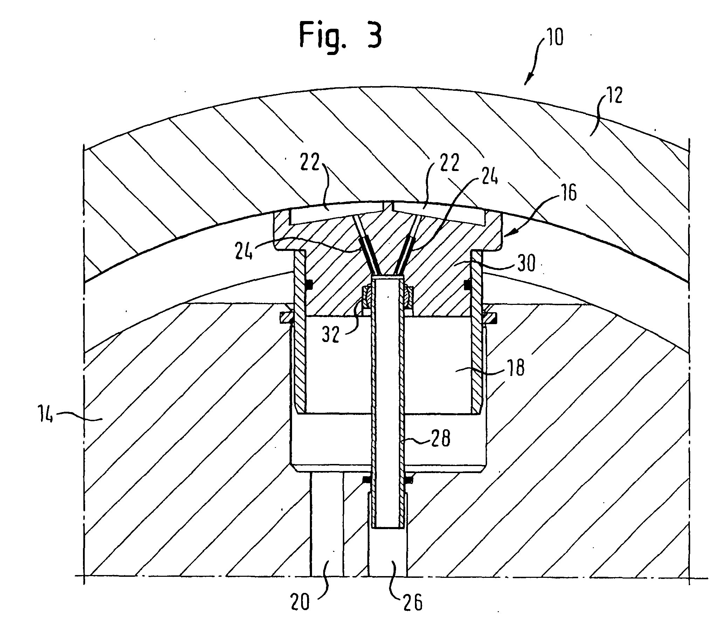

Figur 3 zeigt in schematischer geschnittener Teildarstellung eine Durchbiegungseinstellwalze 10, die zur Behandlung einer Materialbahn wie insbesondere einer Papier- oder Kartonbahn in einem mit einer Gegenfläche gebildeten Spalt (nicht gezeigt) dienen kann.

Die Durchbiegungseinstellwalze 10 umfaßt einen umlaufenden Walzenmantel 12, ein den Walzenmantel 12 axial durchsetzendes drehfestes Joch 14 und mehrere in Richtung der Walzenachse hintereinander am Joch 14 angeordnete hydrostatische Stützelemente 16, von denen in der Figur 3 lediglich eines zu erkennen ist.

Die Stützelemente 16 sind jeweils durch eine druckfluidbetätigte Zylinder/Kolben-Einheit gebildet, die auf die Innenseite des Walzenmantels 12 eine jeweilige Stützkraft ausübt.

Die Stützelemente 16 können einzeln und/oder gruppenweise ansteuerbar sein, wodurch sich entsprechende, in Richtung der Walzenachse aufeinanderfolgende Walzenzonen ergeben.

Der Druckraum 18 eines jeweiligen Stützelements 16 ist über einen im Joch 14 vorgesehenen Kanal 20 mit Druckfluid beaufschlagbar.

Wie anhand der Figur 3 zu erkennen ist, weist ein jeweiliges Stützelement 16 mehrere Hydrostatiktaschen 22, z.B. vier solche Taschen auf.

Im vorliegenden Fall werden die Hydrostatiktaschen 22 getrennt vom Druckraum 18 des jeweiligen hydrostatischen Stützelements 16 mit einem konstanten Volumenstrom an Druckfluid, d.h. insbesondere Drucköl, versorgt. Dazu wird diesen Hydrostatiktaschen 22 über im Stützelement 16 vorgesehene Drosseln oder Kapillaren 24 Druckfluid mittels eines vom Druckraum 18 und dem Kanal 20 getrennten Kanals 26 zugeführt. Dieser ebenso wie der Kanal 20 im Joch 14 vorgesehene Kanal 26 kann beispielsweise über einen den Druckraum 18 durchsetzenden Rohrabschnitt 28 oder dergleichen mit den Drosseln 24 bzw. einem diesen vorgeschalteten, den verschiedenen Drosseln 24 gemeinsamen Raum im Kolben 30 des Stützelements 16 verbunden sein. Wie anhand der Figur 3 zu erkennen ist, ist das kolbenseitige Ende des Rohrabschnitts 28 über ein Schwenklager 32 im Kolben 30 gelagert, so daß der Rohrabschnitt 28 bezüglich des Kolbens 30 in bestimmten Grenzen verschwenkbar ist, um insbesondere entsprechende Kolbenbewegungen ausgleichen zu können.

Sind mehrere zumindest in einer Reihe in Richtung der Walzenachse hintereinander am Joch 14 angeordnete Stützelemente 16 vorgesehen, so werden vorzugsweise die Hydrostatiktaschen 22 sämtlicher Stützelemente 16 jeweils getrennt vom Druckraum 18 des jeweiligen hydrostatischen Stützelements 16 mit einem konstanten Volumenstrom an Druckfluid bzw. Drucköl versorgt.

Bei dieser Durchbiegungseinstellwalze kehrt sich der eingangs beschriebene Temperatureffekt um. So ergeben sich bei mit einem höheren Kolbendruck beaufschlagten Stützelementen 16 geringere Ölspalthöhen und bei mit einem niedrigeren Kolbendruck beaufschlagten Stützelementen 16 größere Ölspalthöhen. Demzufolge nimmt die Reibleistung mit höher werdenden Drücken im Druckraum 18 eines jeweiligen Stützelements 16 zu, während sie mit geringeren Drücken, d.h. mit einer geringeren Belastung des jeweiligen Stützelements 16 abnimmt. Demzufolge führen höhere Kolbendrücke bzw. höhere Belastungen der Stützelemente 16 zu einer höheren Mischtemperatur an den Stützelementen 16, während eine jeweilige Druckentlastung entsprechend eine niedrigere Mischtemperatur mit sich bringt. Der eingangs erwähnte, die Streckenlastverteilung beeinflussende Temperatureffekt wirkt also umgekehrt. So wird nunmehr an den Stellen, an denen ein hoher Druck erwünscht ist, die durch eine entsprechende Druckbeaufschlagung der jeweiligen Stützelemente 16 hervorgerufene Wirkung durch die thermisch bedingte Walzenausdehnung unterstützt. Entsprechend wird an den Stellen, an denen beispielsweise über die entsprechende Steuerung oder Regelung eine Druckentlastung erwünscht-ist, eine solche Druckentlastung durch eine thermisch bedingte Entlastung über die Walzenform unterstützt.

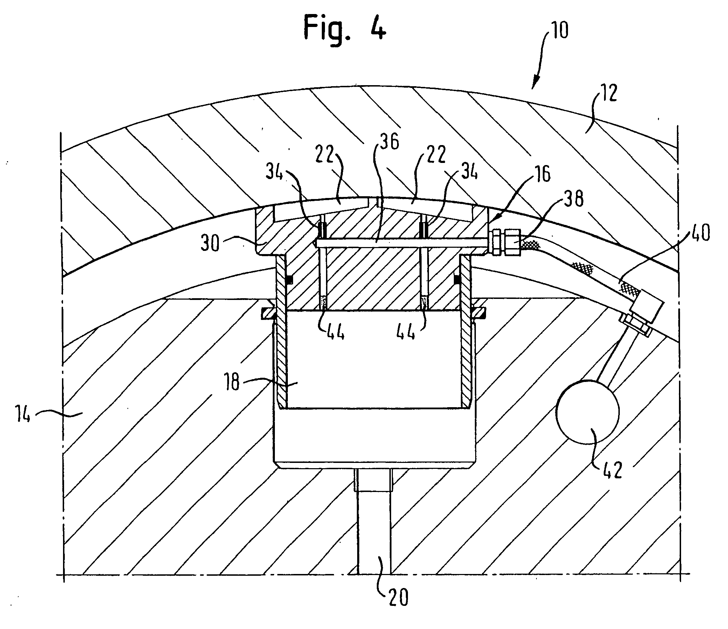

Figur 4 zeigt in schematischer geschnittener Teildarstellung eine beispielhafte Ausführungsform einer erfindungsgemäßen Durchbiegungseinstellwalze 10. Auch diese Durchbiegungseinstellwalze 10 kann beispielsweise wieder zur Behandlung einer Materialbahn wie insbesondere einer Papier- oder Kartonbahn in einem mit einer Gegenfläche gebildeten Spalt (nicht gezeigt) dienen. Sie umfaßt wieder einen umlaufenden Walzenmantel 12, ein den Walzenmantel 12 axial durchsetzendes drehfestes Joch 14 und mehrere in Richtung der Walzenachse hintereinander am Joch 14 angeordnete hydrostatische Stützelemente 16, von denen in der Figur 4 lediglich wieder eines zu erkennen ist.

Die Stützelemente 16 sind jeweils wieder durch eine druckfluidbetätigte Zylinder/Kolben-Einheit gebildet, die auf die Innenseite des Walzenmantels 12 eine jeweilige Stützkraft ausübt. Zudem können die Stützelemente auch wieder einzeln und/oder gruppenweise ansteuerbar sein, wodurch sich entsprechende, in Richtung der Walzenachse aufeinanderfolgende Walzenzonen ergeben.

Der Druckraum 18 eines jeweiligen Stützelements 16 ist auch wieder über einen im Joch 14 vorgesehenen Kanal 20 mit Druckfluid beaufschlagbar.

Schließlich sind die Stützelemente 16 jeweils auch wieder mit mehreren, . z.B. vier, Hydrostatiktaschen 22 versehen.

Im vorliegenden Fall sind die Hydrostatiktaschen 22 eines jeweiligen hydrostatischen Stützelements 16 jeweils über wenigstens eine Vordrossel 34 mit einem konstanten Fluiddruck, d.h. insbesondere einem konstanten Öldruck, beaufschlagt. Dazu sind die im Innern eines jeweiligen Stützelements 16 vorgesehenen Vordrosseln 34 an ihren von der jeweiligen Hydrostatiktasche 22 abgewandten Ende an einen vom Druckraum 18 getrennten, das Fluid bzw. Öl konstanten Drucks führenden Kanal 36 angeschlossen. Dieser ebenso wie die Vordrosseln 34 im Kolben 30 des betreffenden Stützelements 16 vorgesehene Kanal 36 ist über einen außen am Kolben 30 vorgesehenen Anschluß 38 mit einer Leitung 40 verbunden, über die Druckfluid bzw. Drucköl aus einem vom Druckraum 18 und dem Kanal 20 getrennten Kanal 42 im Joch 14 an den der Fluidverteilung auf die verschiedenen Vordrosseln 34 dienenden Kanal 36 im Kolben 30 zugeführt wird.

An den von den Hydrostatiktaschen 22 abgewandten Enden der Vordrosseln 34 liegt somit jeweils ein konstanter Fluid- bzw. Öldruck an.

Für die verschiedenen Hydrostatiktaschen 22 eines jeweiligen Stützelements 12 kann ein gemeinsamer Kanal 36 vorgesehen sein.

Bei mehreren zumindest in einer Reihe in Richtung der Walzenachse hintereinander am Joch 14 angeordneten Stützelementen 16 sind vorzugsweise die Hydrostatiktaschen 22 sämtlicher Stützelemente 16 jeweils über wenigstens eine Vordrossel 34 in der beschriebenen Weise mit einem konstanten Fluid- bzw. Öldruck beaufschlagt.

Wie anhand der Figur 4 zu erkennen ist, wurden die Bohrungen für die Vordrosseln 34 aus fertigungstechnischen Gründen als durchgehende Bohrungen ausgeführt. Diese Bohrungen sind durch Verschlüsse 44 gegen den Druckraum 18 abgedichtet.

Mit einer solchen Ausführung wird die unterstützende Wirkung des thermischen Effekts auf die Einstellung einer jeweiligen Streckenlastverteilung noch verstärkt. So fällt der Volumenstrom an den Hydrostatiktaschen 22 eines jeweiligen Stützelements 16 zugeführtem Druckfluids bzw. Drucköl mit steigendem Kolbendruck, d.h. steigender Belastung des jeweiligen Stützelements ab, da sich bei einem mit einem hohen Kolbendruck beaufschlagten Stützelement 16 ein entsprechend hoher Taschendruck einstellt und sich demzufolge an den Vordrosseln 34 eine entsprechend kleinere Druckdifferenz ergibt. Mit einer kleineren Druckdifferenz ergibt sich ein entsprechend kleinerer Volumenstrom. Mit einem zunehmend kleiner werdenden Kolbendruck und einem entsprechend kleiner werdenden Taschendruck eines jeweiligen Stützelements 16 stellt sich an den Vordrosseln 34 entsprechend eine größere Druckdifferenz ein, was einen entsprechend größeren Volumenstrom mit sich bringt.

### Bezugszeichenliste

- 10: Durchbiegungseinstellwalze
- 12: Walzenmantel
- 14: Joch
- 16: Stützelement
- 18: Druckraum
- 20: Kanal
- 22: Hydrostatiktasche
- 24: Drossel, Kapillare
- 26: Kanal
- 28: Rohrabschnitt
- 30: Kolben
- 32: Schwenklager
- 34: Vordrossel
- 36: Kanal
- 38: Anschluß
- 40: Fluid- bzw. Ölleitung
- 42: Kanal
- 44: Verschluß

## Patentansprüche

1. Pressvorrichtung zur Behandlung einer Materialbahn, insbesondere Papier- oder Kartonbahn, mit einem zwischen einer Durchbiegungseinstellwalze (10) und einer Gegenfläche gebildeten Spalt, wobei die Durchbiegungseinstellwalze (10) einen umlaufenden Walzenmantel (12), ein den Walzenmantel (12) axial durchsetzendes drehfestes Joch (14) und am Joch (14) angeordnete, auf die Innenseite des Walzenmantels (12) eine Stützkraft ausübende hydrostatische Stützelemente (16) umfasst, die jeweils durch eine druckfluidbetätigte Zylinder/Kolben-Einheit gebildet und entsprechend über einen Druckraum beaufschlagbar sind, und die Hydrostatiktaschen (22) der hydrostatischen Stützelemente (16) jeweils über wenigstens eine Drossel oder Kapillare (24) mit Druckfluid versorgt werden,
**dadurch gekennzeichnet,**
**dass** durch eine Steuer- oder Regeleinrichtung eine jeweilige Streckenlastverteilung über den Kolbendruck der Stützelemente (16) eingestellt wird und dabei die Hydrostatiktaschen (22) der hydrostatischen Stützelemente (16) jeweils über wenigstens eine Vordrossel (34) mit einem konstanten Fluiddruckbeaufschlagt werden.

2. Pressvorrichtung nach Anspruch 1,
**dadurch gekennzeichnet,**
**dass** die Vordrossel (34) im Innern des betreffenden Stützelements (16) vorgesehen ist.

3. Pressvorrichtung nach Anspruch 1 oder 2,
**dadurch gekennzeichnet,**
**dass** die Vordrossel (34) an ihrem von der Hydrostatiktasche (22) abgewandten Ende an einen vom Druckraum (18) getrennten, das Fluid konstanten Drucks führenden Kanal (36) angeschlossen ist.

4. Pressvorrichtung nach Anspruch 1 bis 3,
**dadurch gekennzeichnet,**
**dass** ein jeweiliges Stützelement (16) mehrere Hydrostatiktaschen (22) aufweist und jede dieser Hydrostatiktaschen (22) jeweils über wenigstens eine Vordrossel (34) mit einem konstanten Fluiddruck beaufschlagt ist.

5. Pressvorrichtung nach einem der Ansprüche 1 bis 4,
**dadurch gekennzeichnet,**
**dass** mehrere zumindest in einer Reihe in Richtung der Walzenachse hintereinander am Joch (14) angeordnete Stützelemente (16) vorgesehen sind und dass die Hydrostatiktaschen (22) sämtlicher Stützelemente (16) jeweils über wenigstens eine Vordrossel (34) mit einem konstanten Fluiddruck beaufschlagt sind.

6. Pressvorrichtung nach einem der Ansprüche 1 bis 5,
**dadurch gekennzeichnet,**
**dass** eine jeweilige Hydrostatiktasche (22) mit Drucköl versorgt wird.

## Claims

1. A pressing apparatus for the treatment of a material web, in particular of a paper or cardboard web, having a gap formed between a deflection conrolled roll (10) and a mating surface, wherein the deflection controlled roll (10) comprises a rotating roll jacket (12), a rotationally fixed yoke (14) axially passing through the roll jacket (12) and hydrostatic support elements (16) which are arranged on the yoke (14), exert a supporting force on the inner side of the roll jacket (12), are formed in each case by a piston in cylinder unit actuated by pressure fluid and chargeable accordingly via a pressure space, and wherein the hydrostatic pockets (22) of the hydrostatic support element (16) are supplied with pressure fluid in each case via at least one restrictor or capillary (24),
**characterized in that**
a respective path load distribution is set by a control or regulation device via the piston pressure of the support elements (16) and, in this process, the hydrostatic pockets (22) of the hydrostatic support elements (16) are in each case charged with a constant fluid pressure via at least one pre-restrictor (34).

2. A pressing apparatus in accordance with claim 1, **characterized in that** the pre-restrictor (34) is provided at the interior of the relevant support element (16).

3. A pressing apparatus in accordance with claim 1 or claim 2, **characterized in that** the pre-restrictor (34) is connected at its end remote from the hydrostatic pocket (22) to a passage (36) separate from the pressure space (18) and conducting fluid of a constant pressure.

4. A pressing apparatus in accordance with claim 1 to claim 3, **characterized in that** a respective support element (16) has a plurality of hydrostatic pockets (22) and each of these hydrostatic pockets (22) is charged with a constant fluid pressure in each case via at least one pre-restrictor (34).

5. A pressing apparatus in accordance with any one of the claims 1 to 4, **characterized in that** a plurality of support elements (16) are provided which are arranged in series on the yoke (14) at least in one row in the direction of the roll axis; and **in that** the hydrostatic pockets (22) of all support elements (16) are each charged with a constant fluid pressure in each case via at least one pre-restrictor (34).

6. A pressing apparatus in accordance with any one of the claims 1 to 5, **characterized in that** a respective hydrostatic pocket (22) is supplied with pressure oil.

## Revendications

1. Dispositif de pressage pour le traitement d'une bande de matériau, en particulier une bande de papier ou de carton, comportant une fente formée entre un rouleau de réglage de flèche (10) et une surface antagoniste, le rouleau de réglage de flèche (10) comprenant un bandage de rouleau périphérique (12), une travée (14) solidaire en rotation traversant axialement l'enveloppe de rouleau (12) et des éléments de soutien (16) hydrostatiques agencés sur la travée (14) et exerçant une force de soutien sur la face inférieure de l'enveloppe de rouleau (12), lesquels sont formés chacun par une unité à piston-et-cylindre actionnée par fluide sous pression et peuvent être sollicités de manière correspondante via une chambre de pression, et les poches hydrostatiques (22) des éléments de soutien (16) hydrostatiques étant chacune alimentées en fluide sous pression via au moins un étranglement ou des capillaires (24),
**caractérisé en ce que**
par un système de commande et de réglage, une répartition de charge linéaire respective est réglée via la pression de piston des éléments de soutien (16), et les poches hydrostatiques (22) des éléments de soutien (16) hydrostatiques sont ici sollicitées chacune via au moins un étranglement préliminaire (34) avec un fluide à pression constante.

2. Dispositif de pressage selon la revendication 1,
**caractérisé en ce que**
l'étranglement préliminaire (34) est prévu à l'intérieur de l'élément de soutien (16) concerné.

3. Dispositif de pressage selon la revendication 1 ou 2,
**caractérisé en ce que**
à son extrémité détournée de la poche hydrostatique (22), l'étranglement préliminaire (34) est branché sur un canal (36) séparé de la chambre de pression (18) et menant le fluide sous pression constante.

4. Dispositif de pressage selon les revendications 1 à 3,
**caractérisé en ce que**
un élément de soutien (16) respectif présente plusieurs poches hydrostatiques (22) et chacune de ces poches hydrostatiques (22) est alimentée avec une pression fluidique constante via au moins un étranglement préliminaire (34).

5. Dispositif de pressage selon l'une des revendications 1 à 4,
**caractérisé en ce que**
plusieurs éléments de soutien (16) agencés les uns derrière les autres sur la travée (14) au moins dans une rangée en direction de l'axe de rouleau et **en ce que** les poches hydrostatiques (22) de tous les éléments de soutien (16) sont alimentées chacune avec un fluide à pression constante via au moins un étranglement préliminaire (34).

6. Dispositif de pressage selon l'une des revendications 1 à 5,
**caractérisé en ce que**
une poche hydrostatique (22) respective est alimentée en huile sous pression.
